# EUROPÄISCHE PATENTSCHRIFT

(11) **EP 0 809 713 B1**
(45) Veröffentlichungstag und Bekanntmachung des Hinweises auf die Patenterteilung: **04.10.2000**
(21) Anmeldenummer: 96925588.4
(22) Anmeldetag: 01.08.1996
(51) Int. Cl.: C21B 13/14

(54) **VERFAHREN ZUR HERSTELLUNG VON FLÜSSIGEM ROHEISEN ODER FLÜSSIGEN STAHLVORPRODUKTEN UND EISENSCHWAMM SOWIE ANLAGE ZUR DURCHFÜHRUNG DES VERFAHRENS**
PROCESS FOR PRODUCING LIQUID RAW IRON OR LIQUID STEEL BASE PRODUCTS AND SPONGE IRON AND PLANT FOR IMPLEMENTING IT
PROCEDE POUR PRODUIRE DE LA FONTE BRUTE LIQUIDE OU DES PRODUITS DE BASE EN ACIER LIQUIDES ET DU FER SPONGIEUX, AINSI QU'INSTALLATIONS POUR SA MISE EN OEUVRE

(30) Priorität: 16.08.1995 AT 137995
(43) Veröffentlichungstag der Anmeldung: 03.12.1997
(73) Patentinhaber: VOEST-ALPINE INDUSTRIEANLAGENBAU GMBH, 4020 Linz (AT)
(72) Erfinder: DIEHL, Jörg, A-4040 Linz (AT); ROSENFELLNER, Gerald, A-3352 St. Peter/Au (AT)
(74) Vertreter: Kopecky, Helmut, Dipl.-Ing. Kopecky & Schwarz Patentanwälte
(86) Internationale Anmeldenummer: AT9600140
(87) Internationale Veröffentlichungsnummer: WO9707247

(56) Entgegenhaltungen:
- EP-A- 0 487 856
- DE-A- 3 713 630
- DE-A- 4 421 673
- STEEL TIMES INTERNATIONAL - INCORPORATING IRON & STEEL INTERNATIONAL, Bd. 18, Nr. 2, 1.März 1994, Seite 12/13 XP000436194 SIUKA D ET AL: "COREX LEADS SMELTING REDUCTION RACE IN THE ABSENCE OF COMMERCIAL COMPETITION FROM OTHER SMELTING REDUCTION PROCESSES, COREX, NOW IN ITS FIFTH YEAR OF OPERATION AT ISCOR, IS AN ESTABLISHED TECHNOLOGY"

## Beschreibung

Die Erfindung betrifft ein Verfahren zur Herstellung von flüssigem Roheisen oder flüssigen Stahlvorprodukten und Eisenschwamm aus von Eisenerz, vorzugsweise in Stück- und/oder Pelletform, und gegebenenfalls Zuschlägen gebildeten Einsatzstoffen, wobei die Einsatzstoffe in einer ersten Reduktionszone zu Eisenschwamm direkt reduziert werden, der Eisenschwamm in einer Einschmelz-Vergasungszone unter Zufuhr von Kohlenstoffträgern und sauerstoffhältigem Gas erschmolzen und ein CO- und H₂-hältiges Reduktionsgas erzeugt wird, welches in die erste Reduktionszone eingeleitet, dort umgesetzt und als Exportgas abgezogen wird. und wobei das abgezogene Exportgas einer CO₂-Eliminierung sowie einer Aufheizung unterzogen wird und als zumindest weitgehend CO₂-freies Reduktionsgas mindestens einer weiteren Reduktionszone zur Direktreduktion von weiterem Eisenerz zugeführt und nach Umsetzung mit dem Eisenerz als Exportgas abgezogen wird, sowie eine Anlage zur Durchführung des Verfahrens.

Ein Verfahren dieser Art ist beispielsweise aus DE-C 40 37 977 bekannt Bei diesem bekannten Verfahren wird aus der weiteren Reduktionszone abgezogenes Exportgas einer Wäsche unterworfen und anschließend gemeinsam mit dem aus der ersten Reduktionszone stammenden Exportgas einer CO₂-Eliminierung sowie einer Aufheizung unterzogen. Dieses Mischgas wird dann dem weiteren Reduktionsprozeß als Reduktionsgas zugeführt. Hierdurch gelingt eine Ausnützung eines Teils der im aus der weiteren Reduktionszone stammenden Exportgas noch vorhandenen Reduktanten, da dieses Exportgas als Recycle-Reduktionsgas dem weiteren Reduktionsprozeß zugeführt wird.

Das bei diesem bekannten Verfahren dem weiteren Reduktionsprozeß zugeführte Reduktionsgas wird zunächst einer Vorerhitzung in einem Wärmetauscher unterzogen und anschließend in einer zweiten Erhitzungsstufe auf die für die Direktreduktion erforderliche Temperatur erhitzt, wobei diese weitere Erhitzung durch eine Teilverbrennung des Reduktionsgases bewerkstelligt wird.

Durch eine solche Teilverbrennung wird jedoch die Qualität des Reduktionsgases verschlechtert, da hierdurch Reduktanten verbraucht werden und der CO₂- bzw. H₂O-Gehalt ansteigen. Das Ansteigen des CO₂-Gehaltes auf einen zu hohen Wert kann zwar dadurch ausgeglichen werden, daß das Reduktionsgas vor der Erhitzung nur einen ganz geringen Gehalt an CO₂ und H₂O aufweist. Hierdurch resultiert jedoch der Nachteil, daß durch eine strenge Spezifikation für den Restgehalt an CO₂ Reduktanten mit dem aus der CO₂-Eliminierungsanlage austretenden Abgas ausgetragen werden.

Die Erfindung bezweckt die Vermeidung dieser Nachteile und Schwierigkeiten und stellt sich die Aufgabe, ein Verfahren sowie eine Anlage zur Durchführung des Verfahrens zu schaffen, welche eine möglichst vollständige Nutzung der Energie des Exportgases, das aus dem weiteren Reduktionsprozeß stammt, und zwar insbesondere durch Schonung dessen Reduktanten, ermöglichen. Weiters soll eine Minimierung der dem weiteren Reduktionsprozeß von außen zuzuführenden Energie erreicht werden. Zudem soll die CO₂-Eliminierungsanlage effizient, d.h. mit möglichst geringem Reduktantenverlust betrieben werden können und trotzdem im der weiteren Reduktionszone zugeführten Reduktionsgas ein hinreichend niederer CO₂- und H₂O-Gehalt sichergestellt sein.

Diese Aufgabe wird bei einem Verfahren der eingangs beschriebenen Art dadurch gelöst, daß für die Aufheizung des aus der ersten Reduktionszone stammenden Exportgases Wärme des der weiteren Reduktionszone austretenden Exportgases ohne Mischung der beiden Exportgase eingesetzt wird.

Es ist eine besondere Aufgabe der Erfindung, für die Aufheizung des der weiteren Reduktionszone zugeführten Reduktionsgases mit einem möglichst geringen Anteil an aus dem weiteren Reduktionsprozeß stammenden Exportgas das Auslangen zu finden, so daß dieses Exportgas in möglichst großer Menge als Recycle-Reduktionsgas dem weiteren Reduktionsprozeß zur Verfügung steht.

Diese Aufgabe wird dadurch gelöst, daß zur Aufheizung dem aus der weiteren Reduktionszone abgezogenen Exportgas im heißen, ungewaschenen Zustand fühlbare Wärme rekuperativ entzogen wird und dem aus der ersten Reduktionszone stammenden Exportgas über einen Wärmeträger übennittelt wird, wobei vorteilhaft der Wärmeträger von gewaschenem Exportgas der weiteren Reduktionszone gebildet ist.

Gemäß einer bevorzugten Ausführungsform wird zur Aufheizung des aus dem ersten Reduktionsprozeß stammenden Exportgases aus der weiteren Reduktionszone abgezogenes Exportgas nach einer Wäsche rekuperativ von ungewaschenem Exportgas der weiteren Reduktionszone erhitzt und verbrannt, wobei die Rauchgase das aus der ersten Reduktionszone stammende Exportgas rekuperativ erhitzen. Hierdurch läßt sich die Menge des zur Verbrennung gelangenden Exportgases minimieren, wodurch mehr Exportgas zum Rezyklieren zur Verfügung steht und letztendlich eine beträchtliche Erhöhung der Kapazität der Anlage erzielt werden kann.

Gemäß einer weiteren bevorzugten Ausführungsform erfolgt eine Voraufheizung des aus der ersten Reduktionszone stammenden Exportgases durch Verbrennung von aus der weiteren Reduktionszone stammendem Exportgas und durch rekuperativen Wärmeübergang der in den Rauchgasen enthaltenen Wärme und anschließend eine weitere Aufheizung durch eine Teilverbrennung des aus der ersten Reduktionszone stammenden Exportgases, wobei dem Teilverbrennungsprozeß die beim weiteren Reduktionsprozeß nicht verbrauchte Wärmeenergie zugeführt wird.

Hierbei wird vorteilhaft für die Teilverbrennung eingesetzter Sauerstoff bzw. eingesetztes sauerstoffhältiges Gas einer rekuperativen Erhitzung unterworfen, und zwar durch im Exportgas, stammend aus dem weiteren Reduktionsprozeß, enthaltene chemisch gebundene und/oder fühlbare Wärme.

Dies bringt den Vorteil einer Minimierung des Sauerstoffverbrauchs und auch einer Minimierung des Verbrauchs von Reduktionsgas für die Teilverbrennung. Dies erlaubt wiederum eine höhere CO₂-Spezifikation im gereinigten Exportgas für die CO₂-Eliminierungsanlage, was nicht nur eine weitere Nutzung der Restenergie, sondern ein höherwertiges Reduktionsgas (mit einer höheren Menge an Reduktanten) und eine erhöhte Produktionskapazität ergibt.

Diese Vorteile vergrößern sich, wenn zumindest ein Teil des aus der weiteren Reduktionszone abgezogenen Exportgases verbrannt wird und das dabei entstehende Rauchgas fühlbare Wärme an den Sauerstoff bzw. das sauerstoffhältige Gas rekuperativ abgibt.

Eine zusätzliche Erhöhung dieser Vorteile läßt sich dadurch erzielen, daß ein Teil des voraufgeheizten, aus der ersten Reduktionszone abgezogenen Exportgases als Brenngas zur Verbrennung desselben zusammen mit Sauerstoff bzw. einem sauerstoffhältigen Gas eingesetzt wird.

Weiters ist es zweckmäßig, wenn zur Verbrennung von aus der weiteren Reduktionszone stammendem Exportgas diesem Exportgas Luft beigemengt wird, die mit bei der Verbrennung von aus der weiteren Reduktionszone abgezogenem Exportgas entstehendem Rauchgas rekuperativ erhitzt wird.

Eine Anlage zur Durchführung des Verfahrens mit einem ersten Reduktionsreaktor für Eisenerz, vorzugsweise in Stück- und/oder Pelletform, einem Einschmelzvergaser, einer den Einschmelzvergaser mit dem ersten Reduktionsreaktor verbindenden Zuleitung für ein Reduktionsgas, einer den ersten Reduktionsreaktor mit dem Einschmelzvergaser verbindenden Förderleitung für das im ersten Reduktionsreaktor gebildete Reduktionsprodukt, mit einer vom ersten Reduktionsreaktor ausgehenden Exportgas-Ableitung, mit in den Einschmelzvergaser mündenden Zuleitungen für sauerstoffhältige Gase und Kohlenstoffträger, einem am Einschmelzvergaser vorgesehenen Abstich für Roheisen und Schlacke, und mit mindestens einem zusätzlichen Reduktionsreaktor zur Aufnahme von weiterem Eisenerz, einer Reduktionsgas-Zuleitung zu diesem Reduktionsreaktor, einer Exportgas-Ableitung aus diesem weiteren Reduktionsreaktor und einer Austragsvorrichtung für das in diesem weiteren Reduktionsreaktor gebildete Reduktionsprodukt, wobei die Exportgas-Ableitung des ersten Reduktionsreaktors in eine CO₂-Eliminierungsanlage mündet, von der die Reduktionsgas-Zuleitung des zusätzlichen Reduktionsreaktors ausgeht und über eine Heizeinrichtung für das von CO₂ gereinigte Exportgas in den zusätzlichen Reduktionsreaktor mündet, ist dadurch gekennzeichnet, daß die Exportgas-Ableitung des weiteren Reduktionsreaktors in einen Wärmetauscher mündet und von diesem zu einem Wäscher führt, daß nach diesem Wäscher eine Zweigleitung von der Exportgas-Ableitung abzweigt, in den Wärmetauscher zwecks rekuperativer Aufheizung des abgezweigten gewaschenen Exportgases durch ungewaschenes Exportgas mündet und von diesem ausgehend der Heizeinrichtung zugeführt ist.

Hierbei ist zweckmäßig, wenn die Zweigleitung in einen Brenner der Heizeinrichtung mündet und daß das Rauchgas des Brenners mittels einer Rauchgasableitung über einen Wärmetauscher zur rekuperativen Erhitzung eines der Heizeinrichtung über eine Leitung zugeführten sauerstoffhältigen Gases oder Sauerstoffes geführt ist.

Vorzugsweise mündet die Zweigleitung in einen Brenner der Heizeinrichtung und ist das Rauchgas des Brenners mittels einer Rauchgasableitung über einen Wärmetauscher zur rekuperativen Erhitzung eines sauerstoffhältigen Gases, wie Luft, zugeführt, wobei die erhitzte Luft zum Brenner der Heizeinrichtung über eine Leitung zugeführt ist.

Eine bevorzugte Ausführungsform ist dadurch gekennzeichnet, daß eine Zweigleitung von der Reduktionsgas-Zuleitung nach dem der Aufheizung des dem weiteren Reduktionsreaktor zugeleiteten Reduktionsgases dienenden Wärmetauscher ausgeht und in eine Nachverbrennungseinrichtung zusammen mit einer Sauerstoff oder ein sauerstoffhältiges Gas zuführenden Leitung mündet.

Eine weitere bevorzugte Anlage mit einem ersten Reduktionsreaktor für Eisenerz, vorzugsweise in Stück- und/oder Pelletform, einem Einschmelzvergaser, einer den Einschmelzvergaser mit dem ersten Reduktionsreaktor verbindenden Zuleitung für ein Reduktionsgas, einer den ersten Reduktionsreaktor mit dem Einschmelzvergaser verbindenden Förderleitung für das im ersten Reduktionsreaktor gebildete Reduktionsprodukt, mit einer vom ersten Reduktionsreaktor ausgehenden Exportgas-Ableitung, mit in den Einschmelzvergaser mündenden Zuleitungen für sauerstoffhältige Gase und Kohlenstoffträger, einem am Einschmelzvergaser vorgesehenen Abstich für Roheisen und Schlacke, und mit mindestens einem zusätzlichen Reduktionsreaktor zur Aufnahme von weiterem Eisenerz, einer Reduktionsgas-Zuleitung zu diesem Reduktionsreaktor, einer Exportgas-Ableitung aus diesem weiteren Reduktionsreaktor und einer Austragsvorrichtung für das in diesem weiteren Reduktionsreaktor gebildete Reduktionsprodukt, wobei die Exportgas-Ableitung des ersten Reduktionsreaktors in eine CO₂-Eliminierungsanlage mündet, von der die Reduktionsgas-Zuleitung des zusätzlichen Reduktionsreaktors ausgeht und über eine Heizeinrichtung für das von CO₂ gereinigte Exportgas in den zusätzlichen Reduktionsreaktor mündet ist dadurch gekennzeichnet, daß von der Exportgas-Ableitung des weiteren Reduktionsreaktors eine Zweigleitung in einen Brenner der Heizeinrichtung mündet und daß das Rauchgas des Brenners mittels einer Rauchgasableitung über einen Wärmetauscher zur rekuperativen Erhitzung eines sauerstoffhältigen Gases, wie Luft, oder von Sauerstoff geführt ist und das erhitzte sauerstoffhältige Gas bzw. der Sauerstoff zur Heizeinrichtung über eine Leitung geführt ist.

Hierbei mündet zweckmäßig das erhitzte sauerstoffhältige Gas bzw. der erhitzte Sauerstoff in eine Nachverbrennungseinrichtung der Heizeinrichtung zusammen mit über eine von der Reduktionsgaszuleitung ausgehende Zweigleitung zugeleitetem Reduktionsgas.

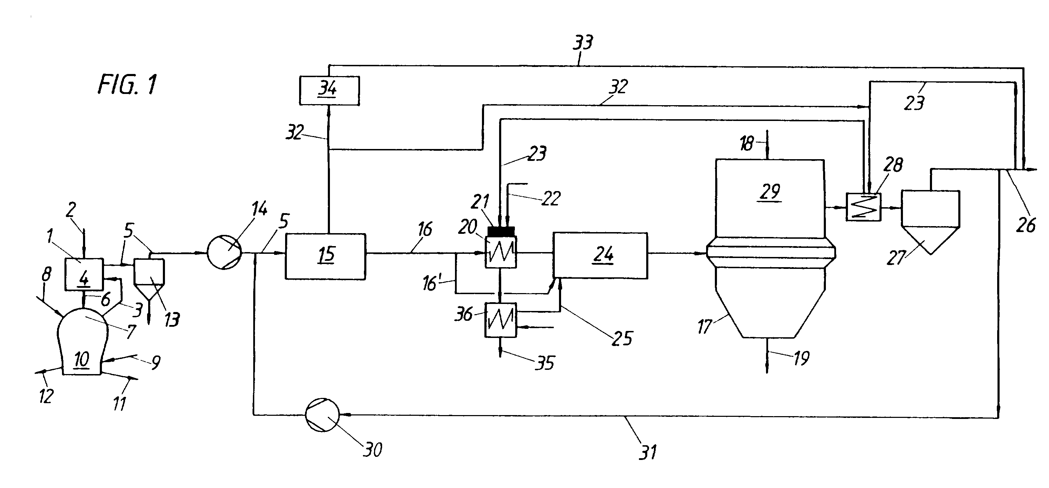

Die Erfindung ist nachfolgend anhand mehrerer Ausführungsbeispiele näher erläutert, wobei die Fig. 1 bis 4 jeweils in Blockschema dargestellte Verfahrensvarianten veranschaulichen.

In einem ersten, als Schachtofen 1 ausgebildeten Reduktionsreaktor werden gemäß den Fig. 1 bis 4 in bekannter Weise über eine Leitung 2 teilchenförmiges, eisenoxidhältiges Material, vorzugsweise stückiges Eisenerz, und etwaige Zuschläge zugeführt. Über eine Zuleitung 3 wird Reduktionsgas in den Reduktionsschachtofen 1 eingeblasen, das entgegen dem Strom des nach unten sinkenden Eisenerzes nach oben aufsteigt und die Reduktion des Einsatzes in der Reduktionszone 4 bewirkt. Nach Durchströmen des Schachtofens 1 wird dieses Gas als Exportgas über eine Exportgas-Ableitung 5 abgeführt. Über vorzugsweise als Fallrohre 6 ausgebildete Förderleitungen gelangt der reduzierte Möller, der Eisen in Form von Eisenschwamm enthält, in einen Einschmelzvergaser 7. Dem Einschmelzvergaser 7 wird in bekannter Weise über eine Leitung 8 ein stückiger Kohlenstoffträger, beispielsweise in Form von Braunkohlen-Hochtemperaturkoks sowie gegebenenfalls als Kohle, und weiters über eine Leitung 9 ein sauerstoffhältiges Gas zugeführt.

Unter "Eisenschwamm" wird ein festes End- oder Zwischenprodukt verstanden, das aus einem Eisenoxid durch Direktreduktion gebildet wird, u.zw. ausschließlich über die feste Phase, d.h. ohne daß es notwendig ist, den Weg über ein flüssiges Zwischenprodukt zu beschreiten.

Der Müller bzw. Eisenschwamm fällt hierbei von üben in der im Einschmelzvergaser 7 gebildeten Einschmelzvergasungszone 10 auf ein aus stückigen Kohlenstoffträgern gebildetes Fließbett bzw. Wirbelbett, das durch das eingeblasene sauerstoffhältige Gas aufrecht erhalten wird. Durch die Verbrennung des Kokses sowie gegebenenfalls der Kohle unter Einwirkung des sauerstoffhältigen Gases wird im Fließbett bzw. Wirbelbett soviel Wärme erzeugt, daß der Eisenschwamm schmilzt. Im geschmolzenen Zustand wird er durch den Kohlenstoff fertig reduziert, so daß sich am Boden des Einschmelzvergasers 7 eine Roheisenschmelze bzw. ein Stahlvorprodukt in flüssigem Zustand ansammelt. Über der Roheisenschmelze bildet sich eine Schlackenschmelze aus. Diese beiden Schmelzen werden in vorgegebenen Zeitabständen über entsprechend angeordnete Abstiche 11, 12 abgezogen.

Bei der Verbrennung des Kokses und gegebenenfalls der Kohle im Einschmelzvergaser 7 wird ein im wesentlichen aus CO und H₂ bestehendes Reduktionsgas erzeugt, das über die Zuleitung 3 aus dem Einschmelzvergaser 7 abgezogen und dem Reduktionsschachtofen 1 zugeführt wird. Eine Reinigung und Abkühlung des im Einschmelzvergaser 7 gebildeten Reduktionsgases auf die für die Direktreduktion erforderliche Temperatur erfolgt in an sich bekannter Weise über Staubabscheider oder Wäscher, was in der Zeichnung jedoch nicht näher dargestellt ist.

Das über die Exportgas-Ableitung 5 abgezogene Exportgas wird zunächst einer Reinigung, beispielsweise in einem Zyklon 13 oder einem Wäscher, unterzogen, um es von Staubpartikeln zu befreien. Anschließend gelangt das Exportgas mit Hilfe eines Verdichters 14 in eine CO₂Eliminierungsanlage 15, in der es weitgehendst von CO₂ und gleichzeitig von H₂S befreit wird. Die CO₂-Eliminierungsanlage ist beispielsweise als Druckwechsel-Adsorptionsanlage oder als CO₂-Wäscher ausgebildet.

Das so gereinigte Exportgas wird als Reduktionsgas über eine Reduktionsgas-Zuleitung 16 einem weiteren Reduktionsreaktor, der als Reduktionsschachtofen 17 ausgebildet ist und ebenso wie der erste Reduktionsschachtofen 1 im Gegenstromprinzip arbeitet, zugeführt. In diesem Schachtofen 17 wird teilchenförmiges Erz, das über die Erzzuleitung 18 zugeführt wird, direkt reduziert. Mit 19 ist eine Ausbringeinrichtung für im Schachtofen 17 aus dem Erz gebildeten Eisenschwamm bezeichnet.

Da das Exportgas für die CO₂-Reinigung auf ein hierfür erforderliches Temperaturniveau zu kühlen ist, wird es vor Einleitung in den weiteren Reduktionsschachtofen 17 einer Aufheizung unterzogen. Die Aufheizung erfolgt in zwei Stufen: Zunächst wird das gereinigte Exportgas in einer ersten Stufe einer indirekten Aufheizung unterzogen, wobei die hierzu dienende Heizeinrichtung 20 als Wärmetauscher ausgebildet ist. Der Wärmetauscher (Rekuperator) 20 weist einen Brenner 21 auf, dem als Brenngas ein sauerstoffhältiges Gas, wie Luft, über eine Leitung 22 und gereinigtes Exportgas, das aus dem weiteren Reduktionsschachtofen 17 abgezogen und über eine Zweigleitung 23 zugeleitet wird, zugeführt wird. Die Erhitzung im Wärmetauscher 20 erfolgt auf eine vom Bündelmaterial gerade noch verträgliche Temperatur. Anschließend wird das in der ersten Stufe rekuperativ erwärmte Reduktionsgas in einer zweiten Stufe auf die für die Reduktion erforderliche Reduktionsgastemperatur weiter erhitzt, und zwar durch eine Teilverbrennung in der Nachverbrennungseinrichtung 24, in der ein Teil des von CO₂ gereinigten Exportgases, das über die Zweigleitung 16' der Reduktionsgas-Zuleitung 16 abgezweigt wird, unter Sauerstoffzuführung 25 verbrannt wird. Hierbei wird Sauerstoff hoher Reinheit verwendet, wodurch das Reduktionsgas die für die Reduktion im weiteren Reduktionsschachtofen 17 erforderliche Temperatur mit einer minimalen Menge an zu verbrennendem Exportgas erreicht. Der erforderliche Temperaturbereich liegt zwischen 600 und 900 ° C.

Das aus dem Reduktionsschachtofen 17 über die Exportgas-Ableitung 26 abgezogene Exportgas wird ebenfalls einer Reinigung und Kühlung in einem Wäscher 27 unterzogen, um es von Staubpartikeln zu säubern und den Wasserdampfgehalt zu erniedrigen. Anschließend wird ein Teil des gereinigten Exportgases über die Zweigleitung 23 abgezweigt und dem Brenner 21 des Wärmetauschers 20 zugeführt. Diese Zweigleitung 23 wird über einen Wärmetauscher 28, der zwischen dem Reduktionsschachtofen 17 und dem Wäscher 27 angeordnet ist und von heißem Exportgas des weiteren Reduktionsprozesses durchströmt wird, geführt, wodurch dieser Teil des gereinigten Exportgases rekuperativ eine beträchtliche Temperaturerhöhung erfährt. Somit braucht dem Brenner 21 nur eine geringe Menge des Exportgases der weiteren Reduktionszone 29 des Reduktionsreaktors 17 zugeführt werden, da dieser Teil des Exportgases mit Hilfe der fühlbaren Wärme des aus dem Reduktionsschachtofen 17 abgezogenen Exportgases auf ein hohes Energieniveau gebracht wurde.

Ein weiterer Teil des im weiteren Reduktionsschachtofen 17 anfallenden Exportgases wird über einen Verdichter 30 ebenfalls der CO₂-Eliminierungsanlage 15 über eine Förderleitung 31, die in die Exportgas-Ableitung 5 mündet, zugeführt und steht dann ebenfalls der CO₂-Eliminierungsanlage 15 und anschließend als Recycle-Reduktionsgas dem weiteren Reduktionsprozeß zur Verfügung. Der für das erfindungsgemäße Verfahren nicht benötigte Teil des Exportgases des Reduktionsschachtofens 17 wird als Exportgas über die Exportgasleitung 26 anderen Verwendungszwecken zugeführt.

Das aus der CO₂-Eliminierungsanlage 15 abgeschiedene CO₂-hältige Abgas wird über eine Abgasleitung 32 zweckmäßig dem über die Zweigleitung 23 dem Brenner 21 des Wärmetauschers 20 zugeführten Teil des Exportgases zugemischt, und zwar vorteilhaft, bevor diese Zweigleitung 23 den Wärmetauscher 28 durchsetzt. In die Exportgas-Ableitung 26 kann auch eine von der Abgasleitung 32 abzweigende Zweigleitung 33, gegebenenfalls mit Entschwefelungseinrichtung 34, mit der ein Teil des CO₂-hältigen Abgases dem Exportgas zugemischt wird, münden.

Gemäß der in Fig. 1 dargestellten Variante wird das im Brenner 21 des Wärmetauschers 20 gebildete Rauchgas über eine Rauchgasableitung 35 abgeführt, wobei in der Rauchgasableitung 35 ein Wärmetauscher 36 zur Erhitzung von Sauerstoff vorgesehen ist. Dieser Sauerstoff wird über die Sauerstoffzuführung 25 dem in der Nachverbrennungseinrichtung 24 stattfindenden Teilverbrennungsprozeß zugeführt. Durch die Erhitzung des Sauerstoffs gelingt eine Minimierung des Sauerstoffverbrauchs und auch eine Minimierung des Verbrauchs an für die Teilverbrennung verwendetem Reduktionsgas.

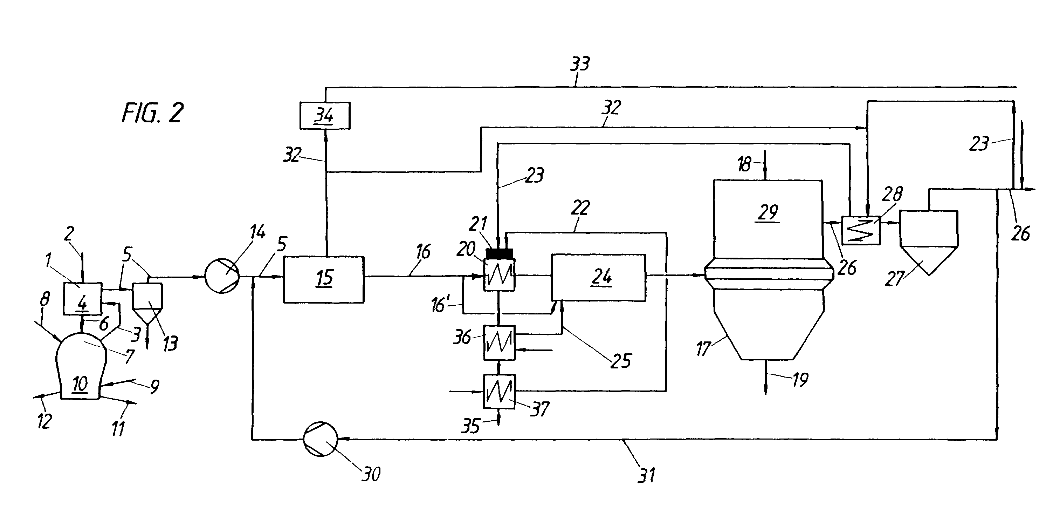

Gemäß der in Fig. 2 dargestellten Verfahrensvariante wird mittels des im Brenner 21 des Wärmetauschers 20 gebildeten Rauchgases zusätzlich noch Luft mit Hilfe eines weiteren in der Rauchgasableitung vorgesehenen Wärmetauschers 37 erhitzt und diese erhitzte Luft dem Brenner 21 des Wärmetauschers 20 über die Leitung 22 zugeführt. Hierdurch läßt sich die Menge des dem Brenner 21 dieses Wärmetauschers 20 zugeführten Exportgases weiter verringern.

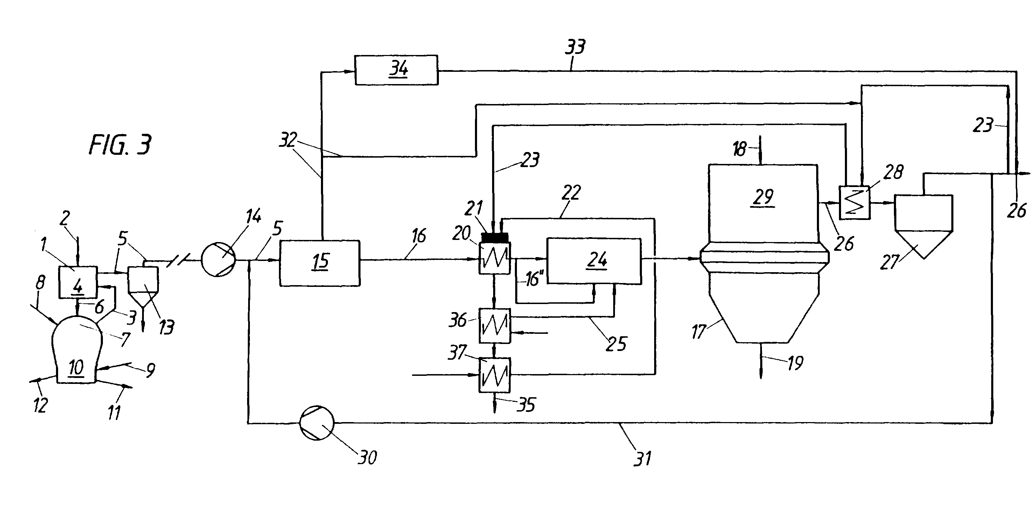

Gemäß der in Fig. 3 dargestellten Verfahrensvariante wird für die Teilverbrennung in der Nachverbrennungseinrichtung 24 im Wärmetauscher 2() vorerhitztes Reduktionsgas - dieses wird über die Zweigleitung 16" abgezweigt - eingesetzt, so daß der Teilverbrennung nicht nur über den zugeführten Sauerstoff fühlbare Wärme des im Brenner 21 des Wärmetauschers 20 gebildeten Rauchgases zur Verfügung gestellt wird, sondern auch über das für die Teilverbrennung vorgesehene Reduktionsgas. Dies ergibt eine optimale Ausnutzung von Restwärme, was sich nicht nur in einer besseren Reduktionsgasqualität niederschlägt, sondern auch in einer erhöhten Produktion.

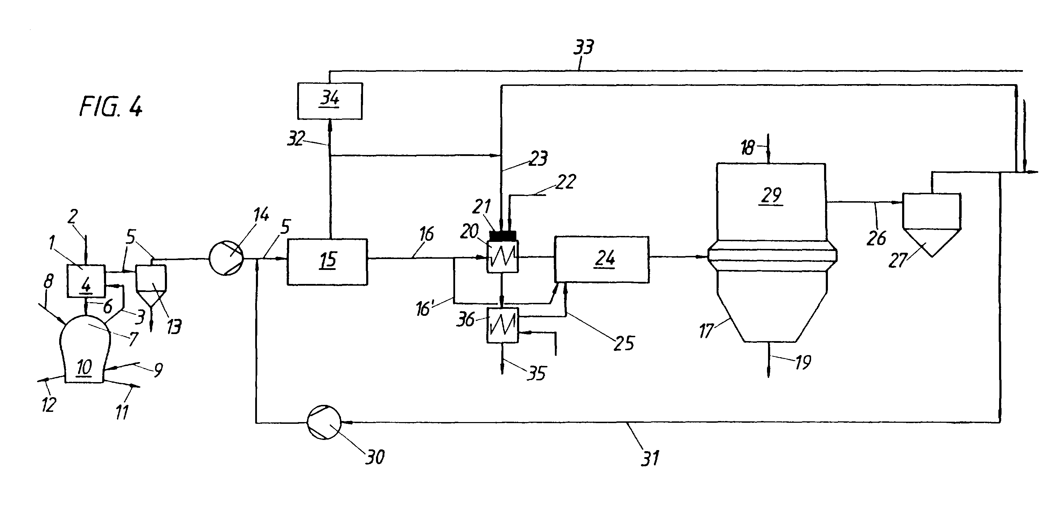

Fig. 4 veranschaulicht eine vereinfachte Verfahrensvariante, bei der das dem Brenner 21 des Wärmetauschers 20 zugeführte und dem weiteren Reduktionsprozeß entstammende Exportgas ohne vorherige Erhitzung in einen Wärmetauscher 28 zugeleitet wird. Bei dieser Verfahrensvariante wird lediglich die im Rauchgas enthaltene fühlbare Wärme für die Sauerstofferhitzung des der Teilverbrennung zugeführten Sauerstoffs ausgenutzt.

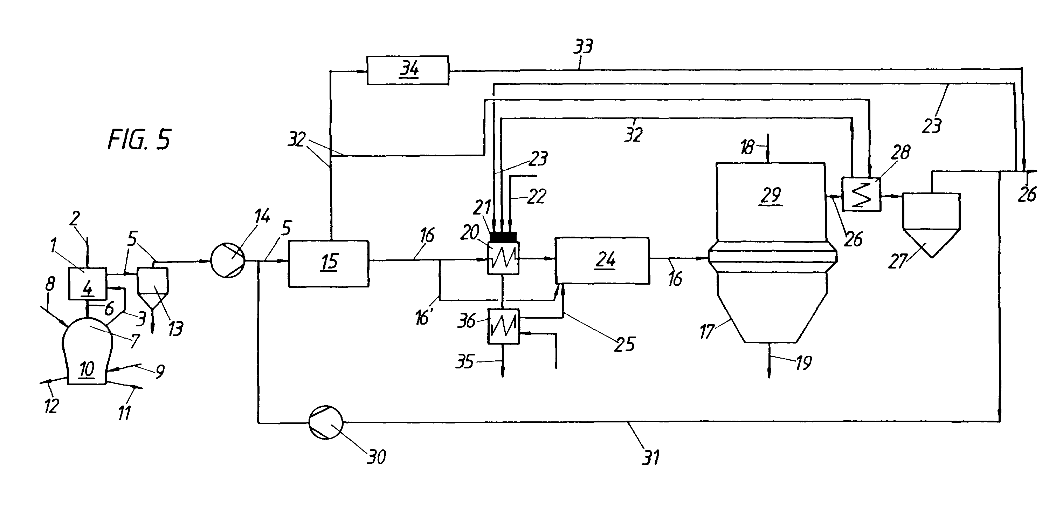

In Fig. 5 ist eine Variante des in Fig. 1 dargestellten Verfahrens veranschaulicht, wobei sich das Verfahren gemäß Fig. 5 von dem Verfahren gem. Fig. 1 dadurch unterscheidet, daß das über die Zweigleitung 23 abgezweigte Exportgas nicht mehr über den Wärmetauscher 28 geführt wird, sondern direkt zum Brenner 21 des Wärmetauschers 20 geleitet wird. Hierdurch bleibt der Heizwert des abgezweigten Exportgases erhalten und dieses hochwertige Exportgas steht dem Brenner 21 als Stützbrenngas zur Verfügung. Da das in der Abgasleitung 32 abgeführte Abgas der CO₂-Eliminierungsanlage 15 nicht mehr mit dem über die Zweigleitung 23 abgezweigten Exportgas vermischt wird, sondern unvermischt im Wärmetauscher 28 erwärmt wird, erreicht es ein höheres Temperaturniveau; es wird separat vom abgezweigten Exportgas dem Brenner 21 zugeführt. Bei dieser Ausführungsform ergibt sich noch der Vorteil, daß der Druckverlust in der Zweigleitung 23 geringer ist als bei der in Fig. 1 dargestellten Variante, da diese Leitung 23 nicht mehr über den Wärmetauscher 28 führt. Zwar wird bei der in Figur 5 dargestellten Ausführungsform das aus der CO₂-Eliminierungsanlage 15 stammende Abgas nicht mehr durch das abgezweigte Exportgas aufgefettet, sodaß dessen Zündfähigkeit nicht erhöht wird, was aber durch die Verbesserung der Zündgrenzen dieses Abgases mittels der im Wärmetauscher 28 stattfindenden verbesserten Temperaturerhöhung in Kombination mit einem durch das abgezweigte Exportgas betriebenen Stützbrenner mehr als aufgewogen wird.

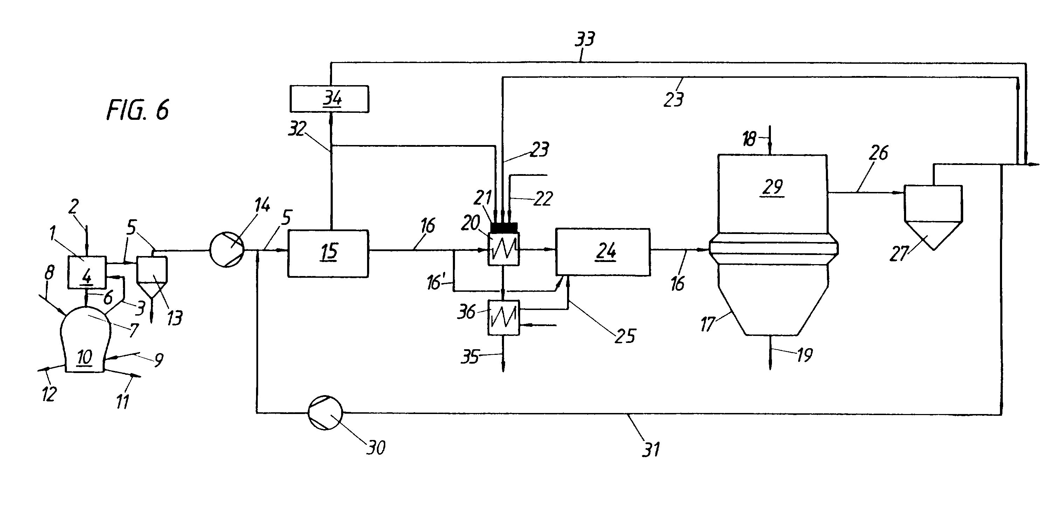

Gemäß der Fig. 6 dargestellten Variante des in Fig. 4 dargestellten erfindungsgemäßen Verfahrens wird ebenfalls das über die Leitung 23 abgezweigte Expongas nicht mehr mit dem Abgas der CO₂-Eliminierungsanlage 15 vermischt, sondern beide Gase werden separat dem Brenner 21 vier Heizeinrichtung 20 zugeführt. wobei wiederum das abgezweigte Exportgas eine Stützbrennfunktion übernimmt.

Die Erfindung beschränkt sich nicht auf die in der Figurenbeschreibung dargelegten Ausführungsbeispiele, sondern kann in verschiedener Hinsicht modifiziert werden. Beispielsweise ist es möglich, anstelle des im Festbettverfahren arbeitenden Schachtofens 1 auch eine Reduktion von Feinerz im Wirbelschichtverfahren vorzusehen, also den Schachtofen 1 durch einen oder mehrere Wirbelbettreaktoren zu ersetzen. Dies gilt auch für den weiteren Reduktionsprozeß, d.h., daß auch der Reduktionsschachtofen 17 durch Wirbelbettreaktoren, in denen Feinerz im Wirbelschichtverfahren reduziert wird, ersetzt werden kann.

Weiters kann es von Vorteil sein, wenn der Wärmetauscher 36 zur Erhitzung von Sauerstoff dem Wärmetauscher 20 vorgeschaltet ist, so daß die im Brenner 21 entstehenden Heißgase zunächst den Sauerstoff und erst danach das gereinigte Exportgas erhitzen. Hierdurch ist der Sauerstoff auf eine höhere Temperatur erhitzbar und kann daher in geringerer Menge zum Einsatz kommen. Dies ergibt als zusätzlichen Vorteil, daß weniger CO und H₂ in der Nachverbrennungseinrichtung 24 umgesetzt werden, so daß die Verhältnisse CO/CO₂ und H₂/H₂O noch verbessert werden können.

An nachstehenden Beispielen ist die Verbesserung des CO/CO₂-Verhältnisses und des H₂H₂O-Verhältnisses bei der Umsetzung in der Nachverbrennungseinrichtung 24 erläutert:

Bei einer Anlage gemäß Fig. 1, bei der jedoch der Wärmetauscher 36 zur Erhitzung von Sauerstoff dem Wärmetauscher 20 zur Erhitzung des Exportgases, wie oben beschrieben, vorgeordnet ist - d.h. das im Brenner 21 gebildete heiße Brenngas durchströmt zunächst den Wärmetauscher 36 und erst anschließend den Wärmetauscher 20-, weist das aus der ersten Reduktionszone 4 stammende Exportgas unmittelbar vor Einleitung in den Wärmetauscher 20 eine Temperatur von 45°C auf. Ein Teil dieses Exportgases wird abgezweigt und mit dieser Temperatur der Nachverbrennungseinrichtung 24 zugeführt.

Im Wärmetauscher 36 auf 500°C vorgewärmter Sauerstoff wird über die Leitung 25 ebenfalls der Nachverbrennungseinrichtung 24 zugeleitet, in der durch Verbrennung ein Heißgas von 4.755°C gebildet wird. Dieses Heißgas wird in der Nachverbrennungseinrichtung 24 mit im Wärmetauscher 20 auf 514°C aufgewärmtem Exportgas vermischt, so daß letztendlich ein Reduktionsgas mit einer Temperatur von etwa 800°C entsteht, das über die Reduktionsgaszuleitung 16 dem weiteren Reduktionsschachtofen 17 zugeführt wird.

Gegenüber dem Stand der Technik, gemäß dem der Sauerstoff mit Raumtemperatur der Nachverbrennungszone zugeleitet wird, ergibt sich eine Qualitätssteigerung dadurch, daß weniger Sauerstoff der Nachverbrennungseinrichtung 24 zugeführt werden muß, wodurch bei der Verbrennung weniger CO und H₂ umgesetzt werden müssen. Hierdurch verbessert sich das CO/CO₂-Verhältnis um etwa 1.4 % und das H₂H₂O-Verhältnis um etwa 3,3 %.

Bei einer Anlage gemäß Fig. 3 gelangt ebenfalls Exportgas mit einer Temperatur von 45°C in den Wärmetauscher 20 und wird dort auf eine Temperatur von 514°C erhitzt und mit dieser Temperatur der Nachverbrennungseinrichtung 24 zugeführt. Ein Teil des so erhitzten Exportgases wird über die Leitung 16" gemeinsam mit im Wärmetauscher 36 auf 250°C aufgeheizten Sauerstoff der Nachverbrennungseinrichtung 24 zugeführt und verbrannt. Hierbei bildet sich ein Heißgas mit einer Temperatur von 4.996°C, woraus ein Reduktionsgas mit einer Temperatur von 801°C resultiert.

Auch hierbei kann die zugeführte Sauerstoffmenge reduziert werden, und es ergibt sich ein CO/CO₂-Verhältnis, das gegenüber dem Stand der Technik um 3.2 % verbessert ist. Das H₂/H₂O-Verhältnis verbessert sich um 7,8 %.

Wird gemäß dem oben beschriebenen Ausführungsbeispiel nach Fig. 3 der Wärmetauscher 36 dem Wärmetauscher 20 vorgeordnet, so daß die im Brenner 21 geführten Heißgase zunächst den Wärmetauscher 36 durchströmen und erst anschließend den Wärmetauscher 20, gelingt eine Erhitzung des Sauerstoffes auf 500°C, so daß dieser in seiner Menge für die Verbrennung in der Nachverbrennungseinrichtung 24 weiter verringert werden kann. Durch die Verbrennung eines Teil des auf 514°C erwärmten Exportgases mit dem so erhitzten Sauerstoff bildet sich Heißgas mit einer Temperatur von 5.051°C, das durch Vermischung mit dem restlichen auf 514°C erhitzten Exportgas ein Reduktionsgas mit einer Temperatur von 800°C und eine Verbesserung des CO/CO₂-Verhältnisses um 3,9 % ergibt. Das H₂/H₂O-Verhältnis verbessert sich um 8.9 %.

Nachfolgend ist der Vorteil der Erhitzung des über die Abgasleitung 32 von der CO₂-Elminierungsanlage 1 abgeschiedenen CO₂-hältigen Abgases im Wärmetauscher 28 erläutert, wobei jedoch im Wärmetauscher 28 ausschließlich CO₂-hältiges Abgas und kein über die Leitung 26 aus dem weiteren Reduktionsschachtofen 17 austretendes Exportgas erhitzt wird. Das aus der CO₂-Elminierungsanlage 15 abgeschiedene CO₂-hältige Abgas weist eine Temperatur von 45°C auf und wird in dem Wärmetauscher 2X zur Erhöhung der Zündfähigkeit erhitzt, u.zw. auf eine Temperatur von etwa 280°C. Eine derartige Erhitzung des Abgases ergibt den Vorteil, daß für eine Verbrennung desselben kein Exportgas des weiteren Reduktionsprozesses mehr zugeführt werden muß.

Das so auf 280°C erhitzte CO₂-hältige Abgas wird über die Leitung 23 dem Brenner 21 zugeführt und dort mit nicht vorgewärmter Luft, also Luft mit etwa 25°C, verbrannt. Es bildet sich dabei ein Heißgas mit einer Temperatur von 851°C. mittels dessen Hilfe im Wärmetauscher 20 Exportgas aus dem ersten Reduktionsprozeß erwärmt werden kann. Durch diese Erhitzung des CO₂-hältigen Abgases über Zündtemperatur gelingt es. das Exportgas, das im weiteren Reduktionsprozeß anfällt, vollständig über die Leitung 31 zu rezirkulieren und somit voll für die Direktreduktion auszunutzen.

## Patentansprüche

1. Verfahren zur Herstellung von flüssigem Roheisen oder flüssigen Stahlvorprodukten und Eisenschwamm aus von Eisenerz, vorzugsweise in Stück- und/oder Pelletform, und gegebenenfalls Zuschlägen gebildeten Einsatzstoffen, wobei die Einsatzstoffe in einer ersten Reduktionszone (4) zu Eisenschwamm direkt reduziert werden, der Eisenschwamm in einer Einschmelz-Vergasungszone (10) unter Zufuhr von Kohlenstoffträgern und sauerstoffhältigem Gas erschmolzen und ein CO- und H₂-hältiges Reduktionsgas erzeugt wird, welches in die erste Reduktionszone (4) eingeleitet, dort umgesetzt und als Exportgas abgezogen wird, und wobei das abgezogene Exportgas einer CO₂-Eliminierung sowie einer Aufheizung unterzogen wird und als zumindest weitgehend CO₂-freies Reduktionsgas mindestens einer weiteren Reduktionszone (29) zur Direktreduktion von weiterem Eisenerz zugeführt und nach Umsetzung mit dem Eisenerz als Exportgas abgezogen wird, dadurch gekennzeichnet, daß für die Aufheizung des aus der ersten Reduktionszone (4) stammenden Exportgases Wärme des der weiteren Reduktionszone (29) austretenden Exportgases ohne Mischung der beiden Exportgase eingesetzt wird.

2. Verfahren nach Anspruch 1, dadurch gekennzeichnet, daß zur Aufheizung dem aus der weiteren Reduktionszone (29) abgezogenen Exportgas im heißen, ungewaschenen Zustand fühlbare Wärme rekuperativ entzogen wird und dem aus der ersten Reduktionszone (4) stammenden Exportgas über einen Wärmeträger übermittelt wird (Fig. 1 bis 3).

3. Verfahren nach Anspruch 2, dadurch gekennzeichnet, daß der Wärmeträger von gewaschenem Exportgas der weiteren Reduktionszone (29) gebildet ist.

4. Verfahren nach Anspruch 3, dadurch gekennzeichnet, daß zur Aufheizung des aus dem ersten Reduktionsprozeß stammenden Exportgases aus der weiteren Reduktionszone (29) abgezogenes Exportgas nach einer Wäsche rekuperativ von ungewaschenem Exportgas der weiteren Reduktionszone (29) erhitzt und verbrannt wird, wobei die Rauchgase das aus der ersten Reduktionszone (4) stammende Exportgas rekuperativ erhitzen (Fig. 1 bis 3).

5. Verfahren nach einem oder mehreren der Ansprüche 1 bis 4, dadurch gekennzeichnet, daß eine Voraufheizung des aus der ersten Reduktionszone (4) stammenden Exportgases durch Verbrennung von aus der weiteren Reduktionszone (29) stammendem Exportgas und durch rekuperativen Wärmeübergang der in den Rauchgasen enthaltenen Wärme erfolgt und anschließend eine weitere Aufheizung durch eine Teilverbrennung des aus der ersten Reduktionszone (4) stammenden Exportgases erfolgt, wobei dem Teilverbrennungsprozeß die beim weiteren Reduktionsprozeß nicht verbrauchte Wärmeenergie zugeführt wird (Fig. 1 bis 4).

6. Verfahren nach Anspruch 5, dadurch gekennzeichnet, daß für die Teilverbrennung eingesetzter Sauerstoff bzw. eingesetztes sauerstoffhältiges Gas einer rekuperativen Erhitzung unterworfen wird, und zwar durch im Exportgas, stammend aus dem weiteren Reduktionsprozeß, enthaltene chemisch gebundene und/oder fühlbare Wärme (Fig. 1 bis 4).

7. Verfahren nach Anspruch 6, dadurch gekennzeichnet, daß zumindest ein Teil des aus der weiteren Reduktionszone (29) abgezogenen Exportgases verbrannt wird und daß das dabei entstehende Rauchgas fühlbare Wärme an den Sauerstoff bzw. das sauerstoffhältige Gas rekuperativ abgibt (Fig. 1 bis 4).

8. Verfahren nach einem oder mehreren der Ansprüche 5 bis 6, dadurch gekennzeichnet, daß ein Teil des voraufgeheizten, aus der ersten Reduktionszone (4) abgezogenen Exportgases als Brenngas zur Verbrennung desselben zusammen mit Sauerstoff bzw. einem sauerstoffhältigen Gas eingesetzt wird (Fig. 3).

9. Verfahren nach einem oder mehreren der Ansprüche 4 bis 5, dadurch gekennzeichnet, daß zur Verbrennung von aus der weiteren Reduktionszone (29) stammendem Exportgas diesem Exportgas Luft beigemengt wird, die mit bei der Verbrennung von aus der weiteren Reduktionszone (29) abgezogenem Exportgas entstehendem Rauchgas rekuperativ erhitzt wird (Fig. 2, 3).

10. Anlage zur Durchführung des Verfahrens nach einem oder mehreren der Ansprüche 1 bis 9, mit einem ersten Reduktionsreaktor (1) für Eisenerz, vorzugsweise in Stück- und/oder Pelletform, einem Einschmelzvergaser (7), einer den Einschmelzvergaser (7) mit dem ersten Reduktionsreaktor (1) verbindenden Zuleitung (3) für ein Reduktionsgas, einer den ersten Reduktionsreaktor (1) mit dem Einschmelzvergaser (7) verbindenden Förderleitung (6) für das im ersten Reduktionsreaktor (1) gebildete Reduktionsprodukt, mit einer vom ersten Reduktionsreaktor (1) ausgehenden Exportgas-Ableitung (5), mit in den Einschmelzvergaser (7) mündenden Zuleitungen (8, 9) für sauerstoffhältige Gase und Kohlenstoffträger, einem am Einschmelzvergaser (7) vorgesehenen Abstich (11, 12) für Roheisen und Schlacke, und mit mindestens einem zusätzlichen Reduktionsreaktor (17) zur Aufnahme von weiterem Eisenerz, einer Reduktionsgas-Zuleitung (16) zu diesem Reduktionsreaktor (17), einer Exportgas-Ableitung (26) aus diesem weiteren Reduktionsreaktor (17) und einer Austragsvorrichtung (19) für das in diesem weiteren Reduktionsreaktor (17) gebildete Reduktionsprodukt, wobei die Exportgas-Ableitung (5) des ersten Reduktionsreaktors (1) in eine CO₂-Eliminierungsanlage (15) mündet, von der die Reduktionsgas-Zuleitung (16) des zusätzlichen Reduktionsreaktors (17) ausgeht und über eine Heizeinrichtung (20, 24) für das von CO₂ gereinigte Exportgas in den zusätzlichen Reduktionsreaktor (17) mündet, dadurch gekennzeichnet, daß die Exportgas-Ableitung (26) des weiteren Reduktionsreaktors (17) in einen Wärmetauscher (28) mündet und von diesem zu einem Wäscher (27) führt, daß nach diesem Wäscher (27) eine Zweigleitung (23) von der Exportgas-Ableitung (26) abzweigt, in den Wärmetauscher (28) zwecks rekuperativer Aufheizung des abgezweigten gewaschenen Exportgases durch ungewaschenes Exportgas mündet und von diesem ausgehend der Heizeinrichtung (20) zugeführt ist (Fig. 1 bis 3).

11. Anlage nach Anspruch 10, dadurch gekennzeichnet, daß die Zweigleitung (23) in einen Brenner (21) der Heizeinrichtung (20) mündet und daß das Rauchgas des Brenners (21) mittels einer Rauchgasableitung (35) über einen Wärmetauscher (36) zur rekuperativen Erhitzung eines der Heizeinrichtung (24) über eine Leitung (25) zugeführten sauerstoffhältigen Gases oder Sauerstoffes geführt ist (Fig. 1 bis 3).

12. Anlage nach Anspruch 10 oder 11, dadurch gekennzeichnet, daß die Zweigleitung (23) in einen Brenner (21) der Heizeinrichtung (20) mündet und daß das Rauchgas des Brenners (21) mittels einer Rauchgasableitung (35) über einen Wärmetauscher (37) zur rekuperativen Erhitzung eines sauerstoffhältigen Gases, wie Luft, zugeführt ist, wobei die erhitzte Luft dem Brenner (21) der Heizeinrichtung (20) über eine Leitung (22) zugeführt ist (Fig. 2, 3).

13. Anlage nach einem oder mehreren der Ansprüche 10 bis 12, dadurch gekennzeichnet, daß eine Zweigleitung (16") von der Reduktionsgas-Zuleitung (16) nach dem der Aufheizung des dem weiteren Reduktionsreaktor (17) zugeleiteten Reduktionsgases dienenden Wärmetauscher (20) ausgeht und in eine Nachverbrennungseinrichtung (24) zusammen mit einer Sauerstoff oder ein sauerstoffhältiges Gas zuführenden Leitung (25) mündet (Fig. 3).

14. Anlage zur Durchführung des Verfahrens nach einem oder mehreren der Ansprüche 10 bis 13, mit einem ersten Reduktionsreaktor (1) für Eisenerz, vorzugsweise in Stück- und/oder Pelletform, einem Einschmelzvergaser (7), einer den Einschmelzvergaser (7) mit dem ersten Reduktionsreaktor (1) verbindenden Zuleitung (3) für ein Reduktionsgas, einer den ersten Reduktionsreaktor (1) mit dem Einschmelzvergaser (7) verbindenden Förderleitung (6) für das im ersten Reduktionsreaktor (1) gebildete Reduktionsprodukt, mit einer vom ersten Reduktionsreaktor (1) ausgehenden Exportgas-Ableitung (5), mit in den Einschmelzvergaser (7) mündenden Zuleitungen (8, 9) für sauerstoffhältige Gase und Kohlenstoffträger, einem am Einschmelzvergaser (7) vorgesehenen Abstich (11, 12) für Roheisen und Schlacke, und mit mindestens einem zusätzlichen Reduktionsreaktor (17) zur Aufnahme von weiterem Eisenerz, einer Reduktionsgas-Zuleitung (16) zu diesem Reduktionsreaktor (17), einer Exportgas-Ableitung (26) aus diesem weiteren Reduktionsreaktor (17) und einer Austragsvorrichtung (19) für das in diesem weiteren Reduktionsreaktor (17) gebildete Reduktionsprodukt, wobei die Exportgas-Ableitung (5) des ersten Reduktionsreaktors (1) in eine CO₂-Eliminierungsanlage (15) mündet, von der die Reduktionsgas-Zuleitung (16) des zusätzlichen Reduktionsreaktors (17) ausgeht und über eine Heizeinrichtung (20, 24) für das von CO₂ gereinigte Exportgas in den zusätzlichen Reduktionsreaktor (17) mündet, dadurch gekennzeichnet, daß von der Exportgas-Ableitung (26) des weiteren Reduktionsreaktors (17) eine Zweigleitung (23) in einen Brenner (21) der Heizeinrichtung (20) mündet und daß das Rauchgas des Brenners (21) mittels einer Rauchgasableitung (35) über einen Wärmetauscher (36) zur rekuperativen Erhitzung eines sauerstoffhältigen Gases, wie Luft, oder von Sauerstoff geführt ist und das erhitzte sauerstoffhältige Gas bzw. der Sauerstoff zur Heizeinrichtung (24) über eine Leitung (25) geführt ist (Fig. 4).

15. Anlage nach Anspruch 14, dadurch gekennzeichnet, daß das erhitzte sauerstoffhältige Gas bzw. der erhitzte Sauerstoff in eine Nachverbrennungseinrichtung (24) der Heizeinrichtung zusammen mit über eine von der Reduktionsgaszuleitung (16) ausgehende Zweigleitung (16', 16") zugeleitetem Reduktionsgas mündet (Fig. 4).

## Claims

1. A process for producing liquid pig iron or liquid steel preproducts and sponge iron from charging substances comprised of iron ore, preferably in lumps and/or pellets, and optionally fluxes, wherein the charging substances in a first reduction zone (4) are directly reduced to sponge iron, the sponge iron in a meltdown gasifying zone (10) is melted under the supply of carbon carriers and an oxygen-containing gas and a reducing gas containing CO and H₂ is produced, which is introduced into the first reduction zone (4), is reacted there and is drawn off as an export gas, and wherein the drawn-off export gas is subjected to CO₂ elimination as well as heating and as a reducing gas at least largely free of CO₂ is fed to at least one further reduction zone (29) for the direct reduction of further iron ore and after the reaction with the iron ore is drawn off as an export gas, characterized in that, without mixing the two export gases, heat of the export gas leaving the further reduction zone (29) is used for heating the export gas derived from the first reduction zone (4).

2. A process according to claim 1, characterized in that, for heating, sensible heat is recuperatively withdrawn from the export gas drawn off the further reduction zone (29) in the hot unscrubbed state and by means of a heat carrier is transmitted to the export gas derived from the first reduction zone (4) (Figs. 1 to 3).

3. A process according to claim 2, characterized in that the heat carrier is comprised of scrubbed export gas of the further reduction zone (29).

4. A process according to claim 3, characterized in that, for heating the export gas derived from the first reduction process, export gas drawn off the further reduction zone (29) after scrubbing is recuperatively heated, and burnt, by unscrubbed export gas of the further reduction zone (29), the smoke gases recuperatively heating the export gas derived from the first reduction zone (4) (Figs. 1 to 3).

5. A process according to one or several of claims 1 to 4, characterized in that preheating of the export gas derived from the first reduction zone (4) is effected by burning export gas derived from the further reduction zone (29) and by the recuperative heat transfer of the heat contained in the smoke gases and subsequently further heating is effected by a partial combustion of the export gas derived from the first reduction zone (4), the thermal energy not consumed in the further reduction process being fed to said partial combustion process (Figs. 1 to 4).

6. A process according to claim 5, characterized in that oxygen or oxygen-containing gas used for said partial combustion is subjected to recuperative heating by means of chemically bound and/or sensible heat contained in the export gas derived from the further reduction process (Figs. 1 to 4).

7. A process according to claim 6, characterized in that at least a portion of the export gas drawn off the further reduction zone (29) is burnt and the smoke gas thereby forming recuperatively gives off sensible heat to the oxygen or oxygen-containing gas, respectively (Figs. 1 to 4).

8. A process according to one or several of claims 5 to 6, characterized in that a portion of the preheated export gas drawn off the first reduction zone (4) is used as a combustion gas along with oxygen and/or an oxygen-containing gas for burning the same (Fig. 3).

9. A process according to one or several of claims 4 to 5, characterized in that, for burning export gas derived from the further reduction zone (29), air is admixed to said export gas, which air is recuperatively heated by smoke gas forming in the combustion of export gas drawn off the further reduction zone (29) (Figs. 2, 3).

10. A plant for carrying out the process according to one or several of claims 1 to 9, comprising a first reduction reactor (1) for iron ore, preferably in lumps and/or pellets, a melter gasifier (7), a supply duct (3) for a reducing gas connecting the melter gasifier (7) with the first reduction reactor (1), a conveying duct (6) for the reduction product formed in the first reduction reactor (1) connecting the first reduction reactor (1) with the melter gasifier (7), an export-gas discharge duct (5) departing from the first reduction reactor (1), supply ducts (8, 9) for oxygen-containing gases and carbon carriers running into the melter gasifier (7), a tap (11, 12) for pig iron and slag provided at the melter gasifier (7), and at least one additional reduction reactor (17) for receiving additional iron ore, a reducing-gas supply duct (16) to said reduction reactor (17), an export-gas discharge duct (26) from said further reduction reactor (17) and a discharge means (19) for the reduction product formed in said further reduction reactor (17), the export-gas discharge duct (5) of the first reduction reactor (1) running into a CO₂ elimination plant (15), from which the reducing-gas supply duct (16) of the additional reduction reactor (17) departs and runs into the additional reduction reactor (17) via a heating means (20, 24) for the export gas purified from CO2, characterized in that the export-gas discharge duct (26) of the additional reduction reactor (17) runs into a heat exchanger (28) and from there leads to a scrubber (27), that a branch duct (23) branches off the export-gas discharge duct (27) after said scrubber (27), runs into the heat exchanger (28) for the purpose of recuperatively heating the branched-off scrubbed export gas by means of unscrubbed export gas and, departing therefrom, is conducted to the heating means (20) (Figs. 1 to 3).

11. A plant according to claim 10, characterized in that the branch duct (23) runs into a burner (21) of the heating means (20) and that the smoke gas of the burner (21), by means of a smoke-gas discharge duct (35) via a heat exchanger (36), is conducted to the recuperative heating of an oxygen-containing gas or oxygen fed to the heating means (24) via duct (25) (Figs. 1 to 3).

12. A plant according to claim 10 or 11, characterized in that the branch duct (23) runs into a burner (21) of the heating means (20) and that the smoke gas of the burner (21) is fed to the recuperative heating of an oxygen-containing gas, such as air, by means of a smoke-gas discharge duct (35) via a heat exchanger (37), the heated air being fed to the burner (21) of the heating means (20) via a duct (22) (Figs. 2, 3).

13. A plant according to one or several of claims 10 to 12, characterized in that a branch duct (16") departs from the reducing-gas supply duct (16) after the heat exchanger (20) serving to heat the reducing gas fed to the further reduction reactor (17) and runs into an afterburning means (24) together with a duct (25) supplying oxygen or an oxygen-containing gas (Fig. 3).

14. A plant for carrying out the process according to one or several of claims 10 to 13, comprising a first reduction reactor (1) for iron ore, preferably in lumps and/or pellets, a melter gasifier (7), a supply duct (3) for a reducing gas connecting the melter gasifier (7) with the first reduction reactor (1), a conveying duct (6) for the reduction product formed in the first reduction reactor (1) connecting the first reduction reactor (1) with the melter gasifier (7), an export-gas discharge duct (5) departing from the first reduction reactor (1), supply ducts (8, 9) for oxygen-containing gases and carbon carriers running into the melter gasifier (7), a tap (11, 12) for pig iron and slag provided at the melter gasifier (7), and at least one additional reduction reactor (17) for receiving additional iron ore, a reducing-gas supply duct (16) to said reduction reactor (17), an export-gas discharge duct (26) from said further reduction reactor (17) and a discharge means (19) for the reduction product formed in said further reduction reactor (17), the export-gas discharge duct (5) of the first reduction reactor (1) running into a CO₂ elimination plant (15), from which the reducing-gas supply duct (16) of the additional reduction reactor (17) departs and runs into the additional reduction reactor (17) via a heating means (20, 24) for the export gas purified from CO₂, characterized in that from the export-gas discharge duct (26) of the further reduction reactor (17) a branch duct (23) runs into a burner (21) of the heating means (20) and that the smoke gas of the burner (21) by means of a smoke-gas discharge duct (35) via a heat exchanger (36) is conducted to the recuperative heating of an oxygen-containing gas, such as air, or of oxygen and the heated oxygen-containing gas or the oxygen, respectively, is conducted to the heating means (24) via a duct (25) (Fig. 4).

15. A plant according to claim 14, characterized in that the heated oxygen-containing gas or the heated oxygen gets into an afterburning means (24) of the heating means together with reducing gas fed via a branch duct (16', 16") departing from the reducing-gas supply duct (16) (Fig. 4).

## Revendications

1. Procédé de fabrication de fonte brute liquide ou de produits primaires en acier liquides et d'éponge de fer à partir de matières chargées constituées par du minerai de fer, de préférence sous la forme de morceaux ou de boulettes, et éventuellement de fondants, les matières chargées étant réduites directement en éponge de fer dans une première zone de réduction (4), l'éponge de fer étant obtenue par fusion dans une zone de gazéification en début de fusion (10) avec apport d'agents porteurs de carbone et de gaz oxygénés, et un gaz de réduction contenant CO et H₂ étant produit, lequel est introduit dans la première zone de réduction (4), y est transformé et en est extrait en tant que gaz d'exportation, et le gaz d'exportation extrait étant soumis à une élimination de CO₂ ainsi qu'à un chauffage et étant envoyé en tant que gaz de réduction au moins en grande partie exempt de CO₂ à au moins une zone de réduction supplémentaire (29) pour la réduction directe de minerai de fer supplémentaire et, après transformation, étant extrait en tant que gaz d'exportation avec le minerai de fer, caractérisé en ce que, pour le chauffage du gaz d'exportation provenant de la première zone de réduction (4), on utilise de la chaleur du gaz d'exportation sortant de la zone de réduction supplémentaire (29), sans mélanger les deux gaz d'exportation.

2. Procédé selon la revendication 1, caractérisé en ce que, pour le chauffage, on récupère de la chaleur sensible à partir du gaz d'exportation extrait de la zone de réduction supplémentaire (29) à l'état chaud non lavé et on la transfère, par l'intermédiaire d'un caloporteur, au gaz d'exportation provenant de la première zone de réduction (4) (figures 1 à 3).

3. Procédé selon la revendication 2, caractérisé en ce que le caloporteur est constitué par du gaz d'exportation lavé de la zone de réduction supplémentaire (29).

4. Procédé selon la revendication 3, caractérisé en ce que, pour le chauffage du gaz d'exportation provenant du premier processus de réduction, du gaz d'exportation extrait de la zone de réduction supplémentaire (29) est chauffé et brûlé par récupération, après lavage, par du gaz d'exportation non lavé de la zone de réduction supplémentaire (29), les gaz de fumée chauffant par récupération le gaz d'exportation provenant de la première zone de réduction (4) (figures 1 à 3).

5. Procédé selon une ou plusieurs des revendications 1 à 4, caractérisé en ce qu'un préchauffage du gaz d'exportation provenant de la première zone de réduction (4) est effectué par combustion de gaz d'exportation provenant de la zone de réduction supplémentaire (29) et par transfert de chaleur récupérée de la chaleur contenue dans les gaz de fumée, et un chauffage supplémentaire a ensuite lieu par combustion partielle du gaz d'exportation provenant de la première zone de réduction (4), l'énergie calorifique non consommée lors du processus de réduction supplémentaire étant dirigée vers le processus de combustion partielle (figures 1 à 4).

6. Procédé selon la revendication 5, caractérisé en ce que l'oxygène ou le gaz oxygéné utilisé pour la combustion partielle est soumis à un chauffage de récupération, à savoir à l'aide de chaleur liée chimiquement et/ou sensible contenue dans le gaz d'exportation provenant du processus de réduction supplémentaire (figures 1 à 4).

7. Procédé selon la revendication 6, caractérisé en ce qu'au moins une partie du gaz d'exportation extrait de la zone de réduction supplémentaire (29) est brûlée, et en ce que les gaz de fumée ainsi produits cèdent de la chaleur sensible récupérée à l'oxygène ou, respectivement, au gaz oxygéné (figures 1 à 4).

8. Procédé selon une ou plusieurs des revendications 5 et 6, caractérisé en ce qu'une partie du gaz d'exportation préchauffé extrait de la première zone de réduction (4) est utilisée comme gaz combustible pour brûler celui-ci conjointement avec l'oxygène ou, respectivement, un gaz oxygéné (figure 3).

9. Procédé selon une ou plusieurs des revendications 4 et 5, caractérisé en ce que, pour la combustion de gaz d'exportation provenant de la zone de réduction supplémentaire (29), on ajoute à ce gaz d'exportation de l'air qui est chauffé par la récupération de gaz de fumée produits lors de la combustion de gaz d'exportation extrait de la zone de réduction supplémentaire (29) (figures 2, 3).

10. Installation pour la mise en ouvre du procédé selon une ou plusieurs des revendications 1 à 9, comprenant un premier réacteur de réduction (1) pour du minerai de fer, de préférence sous forme de morceaux et/ou de boulettes, une unité de gazéification en début de fusion (7), une conduite d'alimentation (3) qui relie l'unité de gazéification en début de fusion (7) au premier réacteur de réduction (1) et qui est destinée à un gaz de réduction, une conduite de refoulement (6) qui relie le premier réacteur de réduction (1) à l'unité de gazéification en début de fusion (7) et qui est destinée au produit de réaction formé dans le premier réacteur de réduction (1), une conduite d'évacuation de gaz d'exportation (5) sortant du premier réacteur de réduction (1), des conduites d'alimentation (8, 9) qui débouchent dans l'unité de gazéification en début de fusion (7) et qui sont destinées à des gaz oxygénés et à des agents porteurs de carbone, des trous de coulée (11, 12) prévus sur l'unité de gazéification en début de fusion (7) pour la fonte brute et le laitier, et au moins un réacteur de réduction supplémentaire (17) pour recevoir du minerai de fer supplémentaire, une conduite d'alimentation en gaz de réduction (16) menant audit réacteur de réduction (17), une conduite d'évacuation de gaz d'exportation (26) sortant dudit réacteur de réduction supplémentaire (17), et un dispositif de décharge (19) pour le produit de réaction formé dans ledit réacteur de réduction supplémentaire (17), la conduite d'évacuation de gaz d'exportation (5) du premier réacteur de réduction (1) débouchant dans une installation d'élimination de CO₂ (15) d'où la conduite d'alimentation en gaz de réduction (16) du réacteur de réduction supplémentaire (17) part pour aboutir dans le réacteur de réduction supplémentaire (17) en traversant un dispositif de chauffage (20, 24) pour le gaz d'exportation débarrassé de CO₂, caractérisée en ce que la conduite d'évacuation de gaz d'exportation (26) du réacteur de réduction supplémentaire (17) débouche dans un échangeur de chaleur (28) et, de là, mène à un laveur (27), en ce qu'en aval de ce laveur (27) une conduite dérivée (23) part de la conduite d'évacuation de gaz d'exportation (26), débouche dans l'échangeur de chaleur (28) pour chauffer par récupération le gaz d'exportation lavé dérivé par du gaz d'exportation non lavé et, à partir de là, repart vers le dispositif de chauffage (20) (figures 1 à 3).

11. Installation selon la revendication 10, caractérisée en ce que la conduite dérivée (23) débouche dans un brûleur (21) du dispositif de chauffage (20), et en ce qu'au moyen d'une conduite d'évacuation de gaz de fumée (35) les gaz de fumée du brûleur (21) traversent un échangeur de chaleur (36) pour chauffer par récupération un gaz oxygéné ou de l'oxygène amené au dispositif de chauffage (24) par une conduite (25) (figures 1 à 3).

12. Installation selon la revendication 10 ou 11, caractérisée en ce que la conduite dérivée (23) débouche dans un brûleur (21) du dispositif de chauffage (20), et en ce qu'au moyen d'une conduite d'évacuation de gaz de fumée (35) les gaz de fumée du brûleur (21) traversent un échangeur de chaleur (37) pour chauffer par récupération un gaz oxygéné, comme de l'air, l'air chauffé étant envoyé au brûleur (21) du dispositif de chauffage (20) par l'intermédiaire d'une conduite (22) (figures 2, 3).

13. Installation selon une ou plusieurs des revendications 10 à 12, caractérisée en ce qu'une conduite dérivée (16") part de la conduite d'alimentation en gaz de réduction (16) en aval de l'échangeur de chaleur (20) servant à chauffer le gaz de réduction amené au réacteur de réduction supplémentaire (17) et débouche dans un dispositif de postcombustion (24) conjointement avec une conduite (25) amenant de l'oxygène ou un gaz oxygéné (figure 3).

14. Installation pour la mise en ouvre du procédé selon une ou plusieurs des revendications 10 à 13, comprenant un premier réacteur de réduction (1) pour du minerai de fer, de préférence sous forme de morceaux et/ou de boulettes, une unité de gazéification en début de fusion (7), une conduite d'alimentation (3) qui relie l'unité de gazéification en début de fusion (7) au premier réacteur de réduction (1) et qui est destinée à un gaz de réduction, une conduite de refoulement (6) qui relie le premier réacteur de réduction (1) à l'unité de gazéification en début de fusion (7) et qui est destinée au produit de réaction formé dans le premier réacteur de réduction (1), une conduite d'évacuation de gaz d'exportation (5) sortant du premier réacteur de réduction (1), des conduites d'alimentation (8, 9) qui débouchent dans l'unité de gazéification en début de fusion (7) et qui sont destinées à des gaz oxygénés et à des agents porteurs de carbone, des trous de coulée (11, 12) prévus sur l'unité de gazéification en début de fusion (7) pour la fonte brute et le laitier, et au moins un réacteur de réduction supplémentaire (17) pour recevoir du minerai de fer supplémentaire, une conduite d'alimentation en gaz de réduction (16) menant audit réacteur de réduction (17), une conduite d'évacuation de gaz d'exportation (26) sortant dudit réacteur de réduction supplémentaire (17), et un dispositif de décharge (19) pour le produit de réaction formé dans ledit réacteur de réduction supplémentaire (17), la conduite d'évacuation de gaz d'exportation (5) du premier réacteur de réduction (1) débouchant dans une installation d'élimination de CO₂ (15) d'où la conduite d'alimentation en gaz de réduction (16) du réacteur de réduction supplémentaire (17) part pour aboutir dans le réacteur de réduction supplémentaire (17) en traversant un dispositif de chauffage (20, 24) pour le gaz d'exportation débarrassé de CO₂, caractérisée en ce qu'à partir de la conduite d'évacuation de gaz d'exportation (26) du réacteur de réduction supplémentaire (17) une conduite dérivée (23) débouche dans un brûleur (21) du dispositif de chauffage (20), et en ce qu'au moyen d'une conduite d'évacuation de gaz de fumée (35) les gaz de fumée du brûleur (21) traversent un échangeur de chaleur (36) pour chauffer par récupération un gaz oxygéné, comme de l'air, ou de l'oxygène, et le gaz oxygéné chauffé ou l'oxygène est envoyé au dispositif de chauffage (24) par l'intermédiaire d'une conduite (25) (figure 4).

15. Installation selon la revendication 14, caractérisée en ce que le gaz oxygéné chauffé ou, respectivement, l'oxygène chauffé aboutit dans un dispositif de postcombustion (24) du dispositif de chauffage conjointement avec du gaz de réduction amené par l'intermédiaire d'une conduite dérivée (16', 16") partant de la conduite d'alimentation en gaz de réduction (16) (figure 4).
